# EUROPÄISCHE PATENTSCHRIFT

(11) **EP 1 068 091 B1**
(45) Veröffentlichungstag und Bekanntmachung des Hinweises auf die Patenterteilung: **06.02.2002**
(21) Anmeldenummer: 99915702.7
(22) Anmeldetag: 25.03.1999
(51) Int. Cl.: B60K 7/00, B60T 13/22, F16D 59/02, F16D 55/02

(54) **HYDROSTATISCH MECHANISCHER ANTRIEB**
HYDROSTATIC MECHANICAL DRIVE
COMMANDE MECANIQUE HYDROSTATIQUE

(30) Priorität: 31.03.1998 DE 19814273
(43) Veröffentlichungstag der Anmeldung: 17.01.2001
(73) Patentinhaber: ZF FRIEDRICHSHAFEN Aktiengesellschaft, 88038 Friedrichshafen (DE)
(72) Erfinder: MANN, Egon, D-88045 Friedrichshafen (DE); GEBHARD, Wolfgang, D-88048 Friedrichshafen (DE)
(86) Internationale Anmeldenummer: EP9902019
(87) Internationale Veröffentlichungsnummer: WO9950085

(56) Entgegenhaltungen:
- WO-A-94/18451
- DE-A- 2 744 977
- DE-A- 19 612 873
- DE-A- 19 637 570
- LANGENBECK B: "FAHRGETRIEBE FUER KETTENUNTERWAGEN VON BAUFAHRZEUGEN" ANTRIEBSTECHNIK, Bd. 35, Nr. 9, 1. September 1996, Seite 36, 38, 40 XP000622842

## Beschreibung

Die Erfindung betrifft einen hydrostatisch mechanischen Antrieb nach dem Oberbegriff von Anspruch 1. Die dort aufgeführten Merkmale können als bekannt gelten.

Hydrostatisch mechanische Radantriebe werden in fahrbaren Baumaschinen und in Fahrzeugen für Sonderaufgaben, z. B. Müllabfuhr, Schwertransport, Feuerwehr usw., eingesetzt, und zwar sowohl für Rad- als auch für Raupenfahrzeuge. Sie treiben einzelne Räder bzw. Kettenräder zum Antrieb der Raupe an. Die Räder sind an einem Flansch einer Radnabe angeschraubt.

Der für den einzelnen Radantrieb zur Verfügung stehende radiale Bauraum wird in der Regel von dem inneren Raddurchmesser bzw. einem Lochkreisdurchmesser für Befestigungsschrauben begrenzt. Die Raddurchmesser und Lochkreisdurchmesser lassen sich nicht beliebig vergrößern, da sonst die Räder nicht mehr in das Fahrzeugkonzept passen und der Aufwand für weitere Bauteile steigen würde, z. B. für die Raupen, Träger usw., oder bei gelenkten Rädern der Einschlagwinkel stark eingeschränkt würde. Innerhalb dieser radialen Begrenzung soll der Radantrieb in der Regel mit einem mechanischen Untersetzungsgetriebe in Form eines Planetengetriebes, mit einer Radlagerung, einem hydraulischen Hubkolbenmotor, einem Deckel für einen hydraulischen Anschluß und mit einer Bremse mit kurzer axialer Länge und geringem Gewicht untergebracht werden.

Die DE-A1 27 44 977 zeigt einen Radantrieb mit einem Axialkolbenmotor nach dem Schiefscheibenprinzip, der ein konstantes Schluckvolumen hat. Ein hochuntersetzendes Zahnradgetriebe in Form eines zweistufigen Planetengetriebes ermöglicht geringe radiale Abmessungen und eine hochbelastbare Lagerung durch Kegelrollenlager. Diese sind zwischen der Radnabe und einem Radnabenträger angeordnet, in dem der Hydromotor untergebracht und mit dem der Planetenträger starr verbunden ist. Allerdings ist die Baulänge erheblich.

Als Antriebsaggregat kann jede Art eines Hydromotors, z. B. auch ein Radialkolbenmotor vorgesehen werden. Diese bauen zwar axial kurz, beanspruchen aber mehr radialen Bauraum. Ferner kann bei dem bekannten Radantrieb die Antriebswelle auf die Fahrzeuginnenseite durchgeführt werden, um auf dieser eine Bremse anzuordnen, was das Gewicht und die Baulänge noch weiter vergrößern würde.

Es ist ferner ein Radantrieb für Raupenfahrzeuge bekannt (Prospekt F 43421/RT 3391-383 f der Zahnradfabrik Passau GmbH aus dem Jahr 1991), bei dem ein Axialkolbenmotor nach dem Schiefscheibenprinzip in einem als Radnabenträger ausgebildeten Gehäuse angeordnet ist. Die Schiefscheibe ist in einem Schwenkrahmen schwenkbar gelagert und ihre Neigung zur Rotationsachse des Axialkolbenmotors kann über einen Hebelmechanismus und einen Hydraulikkolben verstellt werden, wodurch sich das Schluckvolumen und damit die Drehzahl des Axialkolbenmotors ändert. Grundsätzlich kann die Schiefscheibe stufenlos verstellt werden, für viele Anwendungsfälle reichen zwei Verstellstufen aus, nämlich für ein maximales und minimales Schluckvolumen. Dies ist sogar vorteilhaft, wenn zwischen zwei Geschwindigkeitsbereichen während der Arbeit schnell gewechselt werden muß.

Zwischen dem Gehäuse und dem Schwenkrahmen ist eine Feststellbremse in Lamellenbauweise mit automatischer Betätigung axial versetzt zum Axialkolbenmotor angeordnet, die durch eine Tellerfeder geschlossen und hydraulisch geöffnet wird. Die Bremse befindet sich somit zwischen dem Axialkolbenmotor und einem Zahnradgetriebe. Dadurch ist ihre Zugänglichkeit und Kühlung beeinträchtigt. Ferner ist der zur Verfügung stehende Bauraum so beengt, daß die Bremse schwere Fahrzeuge nicht mit ausreichender Sicherheit im Gefälle halten kann.

Aus der DE 196 12 873 A1 ist ein hydrostatisch mechanisches Getriebe zum Antrieb einer Mischtrommel eines Transportbetonmischers bekannt, das einen langsam laufenden Radialkolbenmotor hat. Die Kolben des Radialkolbenmotors liegen über Rollen an einer inneren Nockenbahn eines Kurvenrings an, die einen etwa sinusförmigen Verlauf hat. Jeder Kolben ist in Richtung auf den Kurvenring federbelastet und in einem Kolbenträger geführt. Die Federelemente können beispielsweise Schraubendruckfedern sein und bewirken eine ständige, kraftschlüssige Verbindung zwischen den Rollen, den Kolben und der Nockenbahn. Der Kolbenträger ist triebmäßig über eine mechanische Übersetzungsstufe mit der Mischtrommel verbunden.

Langsam laufende Radialkolbenmotoren mit einem hohen Drehmoment zeichnen sich durch eine große Laufruhe aus. Ferner reicht es für viele Anwendungsfälle aus, die mechanische Übersetzung anstatt mehrstufig einstufig auszubilden. Somit ergibt sich ein kompakter, platzsparender Antrieb. Allerdings ist die Bremswirkung des Radialkolbenmotors wegen der unvermeidbaren Leckagen unbefriedigend und insbesondere als Feststellbremse nicht geeignet, so daß ein Nachpendeln der Mischtrommel zu befürchten ist, wenn der hydrostatisch mechanische Antrieb abgeschaltet wird.

Gegenstand einer älteren Patentanmeldung 196 40 545.9 vom 01.10.96 ist ein hydrostatischer Antrieb für eine Mischtrommel eines Transportbetonmischers mit einer mechanischen Bremse, die beim Stillsetzen des Antriebs verhindert, daß die Mischtrommel nachläuft oder rückwärts dreht. Die Bremse wirkt auf die Abtriebswelle des hydrostatischen Antriebs und wird durch Federkraft geschlossen und über einen Hydraulikkolben geöffnet, der von einem Hydrostatikdruck über eine Verbindungsleitung und ein Druckminderventil beaufschlagt wird.

Der Erfindung liegt die Aufgabe zugrunde, einen kompakten hydrostatisch-mechanischen Antrieb mit einer Feststellbremse zu schaffen, die wenig Bauaufwand erfordert, betriebssicher und auch für unterschiedliche Einsatzfälle geeignet ist. Sie wird gemäß der Erfindung durch die Merkmale des Anspruchs 1 gelöst.

Nach der Erfindung ist der Kolbenträger axial begrenzt verschiebbar. Die Schließfeder, die zwischen dem Axiallager und dem Kolbenträger angeordnet ist, wirkt über den Kolbenträger und schließt die auf der anderen Seite des Kolbenträgers zwischen diesem und einem mit dem Antriebsgehäuse fest verbundenen Teil angeordnete Bremse. Geöffnet wird die Bremse durch das Verteilerstück des Ölverteilers, das eine vom Hydraulikdruck abhängige Axialkraft erzeugt, die der Schließfeder entgegenwirkt und auf diese abgestimmt ist.

Bei dem erfindungsgemäßen Antrieb wirkt das Verteilerstück als Betätigungskolben der Bremse, so daß ein separates Bauteil und ein entsprechender Bauraum hierfür entfällt. Das Verteilerstück wird dabei in Richtung auf den Kolbenträger mit dem Hydraulikdruck beaufschlagt. Dadurch liegt es stirnseitig stets dichtend am Kolbenträger an, wobei die Anlagekraft und die axiale Verstellkraft mit dem Hydraulikdruck anwächst. Übersteigt die so erzeugte Axialkraft die Schließkraft der Schließfeder, wird der Kolbenträger in Richtung auf das Axiallager verschoben und stützt sich an dessen Lagerring ab, sobald ein axialer öffnungsweg erreicht ist.

Zweckmäßigerweise besitzt das Verteilerstück in Umfangsrichtung verlaufende Drucknuten, deren Flanken zum Kolbenträger hin größere Flächen haben als zur entgegengesetzten Seite. Die Flächendifferenzen der einander gegenüberliegenden Flanken erzeugen eine hydraulikdruckabhängige Axialkraft in Richtung auf den Kolbenträger, die auf die erforderliche Schließkraft der Schließfeder abgestimmt werden kann. Bei dieser Anordnung entfallen zusätzliche Verbindungsleitungen für die Feststellbremse. Ferner kann auf Druckminderventile verzichtet werden, da für die Betätigung der Bremse der im Ölverteiler wirksame Hydraulikdruck verwendet wird, ohne daß durch den hohen Druck von über 400 bar zusätzliche Dichtungsprobleme und Belastungsprobleme im Bremssystem der Feststellbremse auftreten.

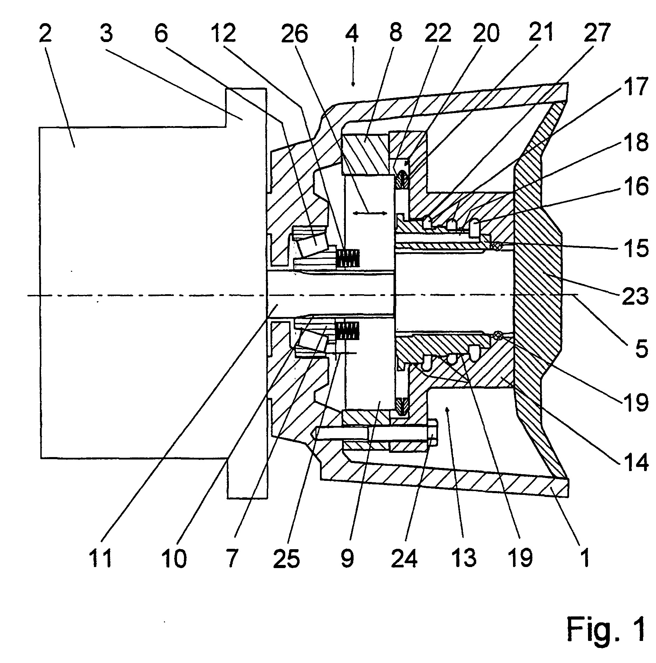

Weitere Vorteile ergeben sich aus der Beschreibung eines Ausführungsbeispiels anhand einer Zeichnung. In der Beschreibung und in den Ansprüchen sind zahlreiche Merkmale im Zusammenhang dargestellt und beschrieben. Der Fachmann wird die kombinierten Merkmale zweckmäßigerweise im Sinne der zu lösenden Aufgaben auch einzeln betrachten und zu sinnvollen weiteren Kombinationen zusammenfassen.
Die einzige Figur zeigt einen teilweisen Längsschnitt durch einen erfindungsgemäßen Antrieb mit einer Bremse.

In einem Antriebsgehäuse 1, das an einem nicht näher dargestellten Fahrzeugrahmen befestigt ist, befindet sich ein Radkolbenmotor 4 mit einem Kurvenring 8 und einem Kolbenträger 9, in dem nicht näher dargestellte, radial angeordnete Kolben geführt sind. Während der Kurvenring 8 zwischen einem Verteilergehäuse 14 eines Ölverteilers 13 und dem Antriebsgehäuse 1 durch Schrauben 24 fest eingespannt ist, kann der Kolbenträger 9 innerhalb des Kurvenrings 8 um eine Rotationsachse 5 drehen. Dabei ist er durch eine formschlüssige Mitnahme 10 drehfest mit einer Abtriebswelle 11 verbunden, über ein Axiallager 6 in Form eines Kegelrollenlagers im Antriebsgehäuse 1 ist der Kolbenträger axial gelagert.

Die Abtriebswelle 11 treibt eine Radnabe 2 an, an deren Radflansch 3 eine Radfelge für ein Radfahrzeug oder ein Kettenrad für ein Kettenfahrzeug befestigt werden kann. In der Radnabe 2 befindet sich in der Regel ein nicht näher dargestelltes Endgetriebe in Planeten- oder Vorgelegebauweise. Anstelle der Radnabe kann auch ein Antriebselement für den Antrieb einer Mischtrommel eines Fahrbetonmischers vorgesehen werden.

Zwischen einem inneren Lagerring 7 des Axiallagers 6 und dem Kolbenträger 9 sind Schließfedern 12 angeordnet, die den begrenzt axial verschiebbaren Kolbenträger 9 in Richtung auf den Ölverteiler 13 belasten. Mit dem Kolbenträger 9 und dem Verteilergehäuse 14 sind zusammenwirkende Bremselemente 22 bzw. 21 einer Bremse 20 fest verbunden, die durch die Schließfedern 12 in Schließstellung gebracht werden. Die Schließfedern 12 können mehrere zu einem Federpaket zusammen geschaltete Tellerfedern oder mehrere über den Umfang verteilte Schraubenfedern sein. Die Bremselemente 21 und 22 können über formschlüssige und/oder reibschlüssige Schließelemente zusammenwirken.

Hydrauliköl wird dem Radialkolbenmotor 4 über den Ölverteiler 13 zugeführt. Ein inneres, axial verschiebbares Verteilerstück 15 liegt an der Stirnseite des Kolbenträgers 9 an, die den Schließfedern gegenüberliegt. Das Verteilerstück 15 besitzt mehrere über den Umfang verteilte Verteilerkanäle 18, die mit Ringnut 16 und Drucknuten 17 verbunden sind. Die im Verteilerstück 15 liegenden Drucknuten 17, über die das Hydrauliköl zugeführt wird, haben auf der Seite des Kolbenträgers 9 Flanken 27, die eine größere Fläche aufweisen als die gegenüberliegenden Flanken. Bei der Druckbeaufschlagung entsteht somit eine Axialkraft in Richtung auf den Kolbenträger 9, die mit dem Hydraulikdruck ansteigt. Die Axialkraft preßt das Verteilerstück 15 dichtend an den Kolbenträger 9 und verschiebt diesen entgegen der Kraft der Schließfedern 12, sobald der Hydraulikdruck einen entsprechenden Wert angenommen hat. Die Flanke 27 der Drucknut 17 im Verteilerstück 15 wird so auf die Schließfedern 12 abgestimmt, daß die Bremse 20 oberhalb eines vorgegebenen Hydraulikdrucks geöffnet ist.

Während des Öffnungsvorgangs wird der Kolbenträger 9 über einen Öffnungsweg 25 verschoben und gelangt dann am inneren Lagerring 7 des Axiallagers 6 zur Anlage, so daß das Bremssystem durch den darüber hinaus ansteigenden Hydraulikdruck nicht belastet wird. Zur Abdichtung des Ölverteilers 13 sind Dichtungen 19 vorgesehen.

### Bezugszeichen

- 1: Antriebsgehäuse
- 2: Radnabe
- 3: Radflansch
- 4: Radialkolbenmotor
- 5: Rotationsachse
- 6: Axiallager
- 7: Lagerring
- 8: Kurvenring
- 9: Kolbenträger
- 10: formschlüssige Mitnahme
- 11: Abtriebswelle
- 12: Schließfeder
- 13: Ölverteiler
- 14: Verteilergehäuse
- 15: Verteilerstück
- 16: Ringnut
- 17: Drucknut
- 18: Verteilerkanal
- 19: Dichtung
- 20: Bremse
- 21: Bremselement
- 22: Bremselement
- 23: Deckel
- 24: Schraube
- 25: öffnungsweg
- 26: Pfeil
- 27: Flanke

## Patentansprüche

1. Hydrostatisch mechanischer Antrieb mit einem hydrostatischen Radialkolbenmotor (4), dessen Kolben sich über Rollen an einem außenliegenden, mit einem Antriebsgehäuse (1) fest verbundenen Kurvenring (8) abstützen und in einem drehbaren Kolbenträger (9) geführt sind, der drehfest mit einer Abtriebswelle (11) verbunden ist, wobei der Kolbenträger (9) zwischen einem Axiallager (6) und einem axial beweglichen Verteilerstück (15) eines Ölverteilers (13) geführt ist, das mit einer Axialkraft am Kolbenträger (9) anliegt, und wobei eine Bremse (20), die durch eine Schließfeder (12) schließt und oberhalb eines bestimmten Hydraulikdrucks öffnet, auf die Abtriebswelle (11) wirkt, **dadurch gekennzeichnet, daß** der Kolbenträger (9) axial begrenzt verschiebbar ist und die Schließfeder (12) zwischen dem Axiallager (6) und dem Kolbenträger (9) angeordnet ist, während die Bremse (20) auf der anderen Seite des Kolbenträgers (9) zwischen diesem und einem mit dem Antriebsgehäuse (1) fest verbundenen Teil (14) liegt und über den Kolbenträger (9) betätigt wird, und daß das Verteilerstück (15) eine vom Hydraulikdruck abhängige Axialkraft erzeugt, die auf die Schließfeder (12) so abgestimmt ist, daß die Bremse (20) oberhalb des bestimmten Hydraulikdrucks öffnet.

2. Antrieb nach Anspruch 1, **dadurch gekennzeichnet, daß** der Kolbenträger (9) nach einem Öffnungsweg (25) der Schließfeder (12), der dem maximalen, bestimmten Wert des Hydraulikdrucks entspricht, am Axiallager (6) anliegt.

3. Antrieb nach einem der vorhergehenden Ansprüche, **dadurch gekennzeichnet, daß** das Verteilerstück (15) in Umfangsrichtung verlaufende Drucknuten (17) aufweist, deren Flanken (27) zum Kolbenträger (9) hin größere Flächen haben als zur entgegengesetzten Seite.

4. Antrieb nach einem der vorhergehenden Ansprüche, **dadurch gekennzeichnet, daß** die Bremse (20) formschlüssige Bremselemente (21, 22) hat.

5. Antrieb nach einem der vorhergehenden Ansprüche, **dadurch gekennzeichnet, daß** die Bremse (20) reibschlüssige Bremselemente (21, 22) hat.

6. Antrieb nach einem der vorhergehenden Ansprüche, **dadurch gekennzeichnet, daß** die Abtriebswelle (11) eine Radnabe (2) antreibt.

7. Antrieb nach Anspruch 6, **dadurch gekennzeichnet, daß** die Abtriebswelle (11) über ein einstufiges oder mehrstufiges Endgetriebe die Radnabe (2) antreibt.

8. Antrieb nach einem der Ansprüche 1 bis 5, **dadurch gekennzeichnet, daß** die Abtriebswelle (11) eine Mischtrommel eines Fahrbetonmischers antreibt.

## Claims

1. Hydrostatically mechanical drive with a hydrostatic radial-piston motor (4) whose pistons are supported, via rollers, on an externally located cam ring (8) which is fixedly connected to a drive housing (1), and are guided in a rotatable piston-carrier (9) which is connected to a driven shaft (11) in a torsion-proof manner, wherein the piston-carrier (9) is guided between an axial bearing (6) and an axially movable distributor piece (15) belonging to an oil-distributor (13), which distributor piece rests with axial force against the said piston-carrier (9), and wherein a brake (20), which closes by means of a closing spring (12) and opens when a given hydraulic pressure is exceeded, acts upon the driven shaft (11),
**characterised in that** the piston-carrier (9) is displaceable in an axially limited manner and the closing spring (12) is disposed between the axial bearing (6) and the piston-carrier (9), while the brake (20) lies on the other side of the said piston-carrier (9), between the latter and a part (14) fixedly connected to the drive housing (1), and is actuated via the piston-carrier (9), and that the distributor piece (15) generates an axial force which depends upon the hydraulic pressure and which is matched to the closing spring (12) in such a way that the brake (20) opens when the given hydraulic pressure is exceeeded.

2. Drive according to claim 1, **characterised in that** the piston-carrier (9) rests against the axial bearing (6) after an opening travel (25) of the closing spring (12) which corresponds to the maximum given value of the hydraulic pressure.

3. Drive according to one of the preceding claims, **characterised in that** the distributor piece (15) has pressure grooves (17) which extend in the peripheral direction and whose flanks (27) have larger areas towards the piston-carrier (9) than towards the opposite side.

4. Drive according to one of the preceding claims, **characterised in that** the brake (20) has form-locking braking elements (21, 22).

5. Drive according to one of the preceding claims, **characterised in that** the brake (20) has friction-locking braking elements (21, 22).

6. Drive according to one of the preceding claims, **characterised in that** the driven shaft (11) drives a wheel hub (2).

7. Drive according to claim 6, **characterised in that** the driven shaft (11) drives the wheel hub (2) via a single-step or multistep final transmission.

8. Drive according to one of claims 1 to 5, **characterised in that** the driven shaft (11) drives a mixing drum belonging to a travelling concrete-mixer.

## Revendications

1. Entraînement mécanique hydrostatique comprenant un moteur hydrostatique à pistons radiaux (4) dont les pistons prennent appui par l'intermédiaire de galets sur une couronne de came extérieure (8) reliée rigidement au carter (1) de l'entraînement et sont guidés dans un support de pistons rotatif (9) qui est relié solidairement en rotation à un arbre de sortie (11), le support de pistons (9) étant guidé entre un palier axial (6) et un élément distributeur (15), mobile dans la direction axiale, appartenant à un distributeur d'huile (13), qui est appuyé avec une force axiale contre le support de pistons (9), cependant qu'un frein (20) qui se serre sous l'action d'un ressort de serrage (12) et se desserre au-dessus d'une pression hydraulique déterminée, agit sur l'arbre de sortie (11), **caractérisé en ce que** le support de pistons (9) est mobile en translation axiale de façon limitée et le ressort de serrage (12) est disposé entre le palier axial (6) et le support de pistons (9), tandis que, de l'autre côté du support de pistons (9), le frein (20) se trouve entre ce support et un élément (14) relié rigidement au carter (1) de l'entraînement, et est actionné par l'intermédiaire du support de pistons (9), et **en ce que** l'élément distributeur (15) produit une force axiale qui est fonction de la pression hydraulique et qui est accordée au ressort de serrage (12) de telle manière que le frein (20) se desserre au-dessus de la pression hydraulique prédéterminée.

2. Entraînement selon la revendication 1, **caractérisé en ce que** le support de pistons (9) est en appui contre le palier axial (6) après une course de desserrage (25) du ressort de serrage (12) qui correspond à la valeur maximale, déterminée, de la pression hydraulique.

3. Entraînement selon l'une des revendications précédentes, **caractérisé en ce que** l'élément distributeur (15) comporte des rainures de pression (17) s'étendant dans la direction circonférentielle et dont les flancs (27) ont une plus grande surface vers le support de pistons (9) que vers le côté opposé.

4. Entraînement selon l'une des revendications précédentes, **caractérisé en ce que** le frein (20) comprend des éléments de frein (21, 22) opérant par complémentarité de forme.

5. Entraînement selon l'une des revendications précédentes, **caractérisé en ce que** le frein (20) comprend des éléments de frein (21, 22) opérant par friction.

6. Entraînement selon l'une des revendications précédentes, **caractérisé en ce que** l'arbre de sortie (11) entraîne un moyeu de roue (2).

7. Entraînement selon la revendication 6, **caractérisé en ce que** l'arbre de sortie (11) entraîne le moyen de roue (2) par l'intermédiaire d'une transmission finale à un étage ou à plusieurs étages.

8. Entraînement selon l'une des revendications 1 à 5, **caractérisé en ce que** l'arbre de sortie (11) entraîne un tambour malaxeur d'un malaxeur à béton mobile.
